# EUROPÄISCHE PATENTSCHRIFT

(11) **EP 3 218 296 B1**
(45) Veröffentlichungstag und Bekanntmachung des Hinweises auf die Patenterteilung: **10.04.2019**
(21) Anmeldenummer: 15791251.0
(22) Anmeldetag: 09.11.2015
(51) Int. Cl.: B66C 23/26, B66C 23/36

(54) **VERFAHREN ZUM VERSETZEN EINES TURMDREHKRANES**
METHOD FOR OFFSETTING A ROTARY TOWER CRANE
PROCÉDÉ DE CHANGEMENT DE PLACE D'UNE GRUE PIVOTANTE SUR PYLÔNE

(30) Priorität: 10.11.2014 DE 102014016607
(43) Veröffentlichungstag der Anmeldung: 20.09.2017
(73) Patentinhaber: Liebherr-Werk Biberach GmbH, 88400 Biberach an der Riss (DE)
(72) Erfinder: KONIJN, Eric, 88430 Rot an der Rot (DE)
(74) Vertreter: Laufhütte, Dieter
(86) Internationale Anmeldenummer: PCT/EP2015/002241
(87) Internationale Veröffentlichungsnummer: WO 2016/074779

(56) Entgegenhaltungen:
- DE-A1- 2 748 340
- US-A- 3 939 988

## Beschreibung

Die Erfindung betrifft ein Verfahren zum Versetzen eines Turmdrehkranes.

Für die Montage von Windkraftanlagen werden aufgrund der benötigten großen Hubhöhen Turmdrehkrane eingesetzt. Diese in der Regel stationären Kranturme werden in Einzelteilen zum Einsatzort transportiert und im Anschluss für den Hebebetrieb montiert. Als relevantes Dokument kann DE 274 8340 A1 in Betracht gezogen werden, es offenbart einen Kletterkran mit einem an einer Konsole abnehmbar befestigten Turm.

Gerade beim Aufbau von sogenannten Windparks mit einer Reihe von Windkraftanlagen ist es wünschenswert, derartige Turmdrehkrane möglichst einfach und schnell von einem Einsatzort zum nächsten Einsatzort zu transportieren. Bisher werden die Krane mithilfe eines Mobilkrans komplett zerlegt, in Einzelteilen auf Transportfahrzeuge verladen und mit diesen zur nächsten Baustelle verfahren. Am Zielort muss der Turmdrehkran erneut mit Hilfe eines Hilfskrans montiert und in Betrieb genommen werden. Diese Vorgehensweise ist nicht nur zeitraubend sondern erfordert zudem einen hohen logistischen Aufwand. In der Regel werden für das Verfahren des Turmdrehkrans mindestens zwei bis maximal fünf Arbeitstage veranschlagt.

Es besteht daher der Wunsch nach einem ökonomisch sinnvolleren Transportverfahren für Turmdrehkrane, die häufiger zwischen verschiedenen Einsatzorten bewegt werden müssen. In der Vergangenheit wurden Versuche angestellt, bei denen ein Raupenunterwagen unter dem Turm zum Verfahren montiert wurde. Allerdings sind in der Praxis manche Krane beim Verfahren umgekippt, da der Höhenschwerpunkt des gesamten Gerätes sehr hoch liegt und dadurch für eine gewisse Instabilität während des Transportvorganges sorgt. Diese Lösung ist in der Praxis daher weniger geeignet.

Die vorliegende Erfindung sucht daher nach alternativen Lösungen für den schnellen Transport eines Turmdrehkranes von einem Einsatzort zum nächsten.

Gelöst wird diese Aufgabe durch das Verfahren gemäß den Merkmalen des Anspruchs 1. Vorteilhafte Ausgestaltungen des Verfahrens sind Gegenstand der sich an den Hauptanspruch anschließenden abhängigen Ansprüche.

Erfindungsgemäß wird ein Verfahren zum Versetzen eines Turmdrehkranes mithilfe eines Mobilkrans vorgeschlagen. Dabei wird der vollständig montierte Turmdrehkran über das Hubseil des Mobilkranes angehoben, um diesen zum Zielort zu versetzen. Ergänzend wird der Turmdrehkran mittels ein oder mehrerer Verbindungsstellen zwischen Mobilkranausleger und Kranturm stabilisiert, sodass eine stabile Lage des aufgenommenen Turmdrehkrans während des gesamten Transportes gewährleistet werden kann.

Als Mobilkran erweist sich insbesondere die Verwendung eines Raupenkrans als vorteilhaft, da Raupenkrane besonders geeignet sind, mit einer angehängten Last verfahren zu werden. Der Turmdrehkran kann insbesondere ein obendrehender Turmdrehkran sein.

Die Hubbewegung des Turmdrehkrans wird über den üblichen Hubantrieb des Mobilkrans bewerkstelligt. Dazu wird das Hubseil bzw. der Lasthaken des Mobilkrans vorzugsweise an ein oder mehrere Fixpunkte am Turm des Turmdrehkrans befestigt. Denkbar ist es, dass entsprechende Aufnahmestellen am Kranturm vorgesehen sind, um die Aufnahme durch das Lastaufnahmemittel des Mobilkrans zu vereinfachen. Insbesondere ist es zweckmäßig, ein am Lasthaken des Mobilkrans befestigtes Aufnahmemittel mit geeigneten Verbindungsstellen des Kranturmes, vorzugsweise am unteren Ende des Kranturms zu verbolzen.

Die Herstellung der Verbindungsstellen zwischen Turmdrehkran und Mobilkranausleger kann vor dem Anheben oder alternativ nach dem Anheben des Kranturms in die erforderliche Hubhöhe erfolgen. In der bevorzugten Ausführungsvariante wird die Verbindung zwischen Kranturm und Mobilkranausleger vor dem Anheben des Kranturmes hergestellt. Notwendig ist dazu eine gewisse Flexibilität der ein oder mehreren Verbindungspunkte zwischen den beiden Kranen, um die nachfolgende Hubbewegung zu ermöglichen. Selbstverständlich kann ein Teil der Verbindungsstellen vor dem Anheben montiert werden, während ein oder mehrere Verbindungsstellen nach dem Anheben befestigt werden.

Besonders bevorzugt ist es, wenn wenigstens eine der Verbindungsstellen als gleitende Verbindungsstelle ausgeführt ist, um eine Hubbewegung des Kranturmes zu ermöglichen, d.h. eine axiale Verschiebung des Kranturms gegenüber der Verbindungsstelle. Denkbar ist es in diesem Zusammenhang, dass die Verbindungsstelle entlang der Längsachse des Kranturmes gleitend an diesem angeordnet ist. Die ein oder mehreren Verbindungsstellen zwischen Mobilkranausleger und Turmdrehkran umfassen vorzugsweise ein Führungslager, wodurch der mechanische Verbindungspunkt in Längsrichtung entlang des Kranturms gleiten kann. Vorstellbar ist ebenfalls, dass nur ein Teil der Verbindungsstellen gleitend ausgeführt ist und der verbleibende Teil starr mit der Kranstruktur des Turmdrehkranes verbunden wird.

Denkbar ist es ebenfalls, dass wenigstens eine der Verbindungsstellen wenigstens einen Knicklenker umfasst

Zur Stabilisierung des Kranturms ist es besonders vorteilhaft, wenn wenigstens eine Verbindungsstelle im oberen Bereich des Kranturms und wenigstens eine weitere Verbindungsstelle im unteren Bereich des Kranturms vorgesehen ist. Bevorzugt wird eine Verbindungsstelle zwischen dem Bereich der Turmspitze und der Auslegerspitze des Mobilkrans und eine weitere Verbindungsstelle zwischen dem Bereich des Turmfußes mit dem Auslegerfuß des Mobilkrans geschaffen.

Zweckmäßig ist es, wenn ein oder mehrere Verbindungsstellen gelenkig ausgestaltet sind, sodass ein gewisser Bewegungsfreiraum des Turmdrehkrans gegenüber dem Mobilkranausleger sichergestellt ist. Dadurch kann die Lage des aufgenommenen Turmdrehkrans besonders einfach justiert werden.

Die ein oder mehreren gelenkigen Verbindungsstellen weisen insbesondere eine horizontale Drehachse auf, vorzugsweise eine horizontale Drehachse senkrecht zur Wippebene des Mobilkrans. Eine Gelenkverbindung kann vorzugsweise im Montagepunkt der Verbindungsstelle am Krankturm und/oder im Montagepunkt der Verbindungsstelle am Mobilkranausleger bzw. im Verbindungspunkt etwaiger Verbindungsmittel vorgesehen sein.

Zur Ausbildung der ein oder mehreren Verbindungsstellen zwischen Mobilkranausleger und Kranturm kann es zweckmäßig sein, geeignete Krankomponenten am Mobilkran und/oder Kranturm vorab zu montieren. Darunter fallen beispielsweise ein oder mehrere Verbindungsrahmen, die am Turm des Turmdrehkrans montiert werden und für die Verbindung mit dem Ausleger des Mobilkrans dienen. Zudem ist es denkbar, dass am Mobilkranausleger ein oder mehrere Aufnahmemittel montiert werden, die entsprechende Befestigungsstellen zur Anbindung des Verbindungsrahmens des Kranturmes aufweisen. Dadurch lässt sich besonders einfach eine vorzugsweise gelenkige Verbindung zwischen Mobilkranausleger und Kranturm erzielen. Zudem ist es vorstellbar, dass längenveränderliche Verbindungsstellen realisiert werden können, die eine zusätzliche Steuerungs- bzw. Regelungsmöglichkeit zur Justierung der Ausrichtung des aufgenommenen Kranturmes bereitstellen. Über die Variation der Länge der Verbindungsstelle lässt sich der Abstand zwischen Mobilkranausleger und Kranturm im Bereich der Verbindungsstelle beeinflussen.

Alternativ können Aufnahmemittel und/oder Verbindungsrahmen natürlich auch fest am Mobilkranausleger und/oder Kranturm verbleiben bzw. fest in die jeweilige Kranstruktur integriert sein.

Beispielsweise ist es denkbar, dass die Lage der Längsachse des aufgenommenen Turmdrehkrans über eine Anpassung des Winkels des Mobilkranauslegers gesteuert und/oder geregelt wird, vorzugsweise um die Längsachse des aufgenommenen Turmdrehkrans in einer nahezu senkrechten Position zu halten. Alternativ oder zusätzlich zur Anpassung des Winkels besteht die Möglichkeit, Einfluss über wenigstens eine längenveränderliche Verbindungsstelle zwischen Mobilkranausleger und Kranturm zu nehmen. Eine längenveränderliche Verbindungsstelle wird insbesondere mithilfe der vorhergehenden Montage eines Verbindungsrahmens sowie eines Aufnahmemittels am Mobilkran geschaffen.

In einer besonders bevorzugten Ausführungsform des erfindungsgemäßen Verfahrens werden vorab die benötigten Komponenten, beispielsweise in Form wenigstens eines Verbindungsrahmens sowie eines Aufnahmemittels am Kranturm bzw. Mobilkranausleger montiert und nachfolgend miteinander verbunden. Anschließend wird das Hubseil des Mobilkrans an den entsprechenden Verbindungsstellen des Kranturmes angeschlagen und der Kranturm leicht angehoben, sodass dieser vollständig ausgeglichen ist. Im Anschluss wird der Turmfuss von der Aufstandsfläche des Kranturmes gelöst, insbesondere wird die Verbindung zwischen Turmfuss und Unterbau gelöst. Im Anschluss kann der Drehkran mithilfe des Hubwerkes des Mobilkrans auf die gewünschte Hubhöhe zum Verfahren an den Zielort angehoben werden. Die nahezu senkrechte Lage des Kranturms wird dabei durch entsprechende Anpassung des Wippwinkels des Mobilkrans als auch einer ggf. längenveränderlichen Verbindungsstelle erreicht. Am gewünschten Zielort wird der Turmdrehkran über das Hubwerk des Mobilkrans abgelassen und am Boden des Zielortes montiert. Anschließend werden die Verbindungsstellen zwischen Mobilkranausleger und Kranturm gelöst und etwaige Komponenten, beispielsweise in Form der Verbindungsrahmen vom Kranturm gelöst.

Neben dem erfindungsgemäßen Verfahren betrifft die vorliegende Erfindung zudem einen Verbindungsrahmen zur Montage an einem Kranturm für die Durchführung des erfindungsgemäßen Verfahrens. Erfindungsgemäß für den Verbindungsrahmen ist es, dass dieser den Umfang des Kranturmes nahezu vollständig umfasst, insbesondere ein Gitterstück des Kranturmes vollständig umfasst. Idealerweise umfasst der Rahmen ein oder mehrere Gleitlager zur Reibungsreduzierung zwischen Rahmen und Kranturm während der vertikalen Hubbewegung. Denkbar ist es, dass der Verbindungsrahmen alternativ oder zusätzlich ein oder mehrere Knicklenker umfasst.

Zusätzlich umfasst der Verbindungsrahmen ein oder mehrere Befestigungsstellen zur Verbindung mit einem Mobilkranausleger bzw. etwaiger Aufnahmemittel eines Mobilkranauslegers. Diese Befestigungsstellen eignen sich insbesondere zur Ausbildung ein oder mehrerer Gelenkverbindungen, insbesondre mit horizontaler Drehachse, vorzugsweise quer zur Wippebene des Mobilkrans. Entsprechende Gelenkverbindungen werden beispielsweise durch eine Bolzenverbindung zwischen Verbindungsrahmen und Mobilkranausleger bzw. Aufnahme geschaffen, wobei eine Schwenkverbindung über den horizontal und quer zur Wippebene verlaufenden Bolzen erreicht wird.

Neben dem Verbindungsrahmen umfasst die vorliegende Erfindung ebenfalls ein Aufnahmemittel zur Montage an einem Mobilkranausleger zur Durchführung des erfindungsgemäßen Verfahrens, wobei das Aufnahmemittel insbesondere zur Befestigung eines Verbindungsrahmens geeignet ist.

Das Aufnahmemittel kann beispielsweise in Form eines Schwenkarmes ausgestaltet sein, der schwenkbar am Mobilkranausleger, insbesondere an dessen Auslegeranlenkstück, montierbar ist. Endseitig umfasst der Schwenkarm zusätzlich die Möglichkeit zur gelenkigen Anbindung wenigstens eines Verbindungsrahmens gemäß der vorliegenden Erfindung. Sowohl die Schwenkbewegung als auch die gelenkige Befestigung des Verbindungsrahmens ermöglichen einen gewissen Freiheitsgrad für die Bewegung des aufgenommenen Kranturmes, insbesondere wird eine Rotation um eine horizontale Drehachse, idealerweise quer zur Wippebene geschaffen.

Der Schwenkarm kann vorzugsweise längenveränderlich ausgestaltet sein, beispielsweise mittels eines Teleskopiermechanismus, sodass über den Schwenkmechanismus, der beispielsweise hydraulisch gesteuert ist, während der Ausführung des erfindungsgemäßen Verfahrens eine Ausrichtung des aufgenommenen Kranturms erreicht werden kann.

Zusätzlich umfasst das Aufnahmemittel vorzugsweise wenigstens einen Stützzylinder zur Fixierung/Verstellung des eingenommenen Schwenkwinkels des Schwenkarmes gegenüber der Auslegerstruktur des Mobilkrans. Der mit dem Schwenkarm verbundene Stützzylinder lässt sich bei der Montage am Mobilkranausleger mit dessen Kranstruktur verbinden, um durch die Kolbenbewegung eine Schwenkbewegung des Schwenkarmes hervorzurufen bzw. den Schwenkwinkel zu halten.

Alternativ zur Ausgestaltung des Schwenkarmes, der bevorzugt im Bereich des Auslegeranlenkstückes eines Mobilkranes montierbar ist, kann das Aufnahmemittel rahmenartig ausgeführt sein und starr am Auslegerkopf eines Mobilkrans montierbar, insbesondere verbolzbar sein. Diese Form des rahmenartigen Aufnahmemittels umfasst ein oder mehrere Befestigungsstellen zur gelenkigen Anbindung wenigstens eines Verbindungsrahmens des Turmdrehkrans gemäß der vorliegenden Erfindung.

Die vorliegende Erfindung betrifft zudem einen Turmdrehkran mit wenigstens einem Verbindungsrahmen gemäß der vorliegenden Erfindung sowie einen Mobilkran, insbesondere Raupenkran, mit wenigstens einem Aufnahmemittel gemäß der vorliegenden Erfindung.

Darüber hinaus umfasst die Erfindung zudem ein System aus wenigstens einem erfindungsgemäßen Turmdrehkran sowie wenigstens einem erfindungsgemäßen Mobilkran.

Weitere Vorteile und Eigenschaften der Erfindung sollen im nachfolgenden Teil anhand eines in den Figuren dargestellten Ausführungsbeispiels näher erläutert werden. Es zeigen:
- Figur 1:: eine Seitendarstellung eines Mobilkrans in Form eines Raupenkrans mit aufgenommenen Turmdrehkran während der Ausführung des erfindungsgemäßen Verfahrens,
- Figur 2:: eine Detaildarstellung der Verbindungsstelle zwischen Mobilkran und Turmdrehkran im Bereich des Auslegerfußes und
- Figur 3:: eine Detaildarstellung der Verbindungsstelle zwischen Mobilkran und Turmdrehkran im Bereich des Auslegerkopfes.

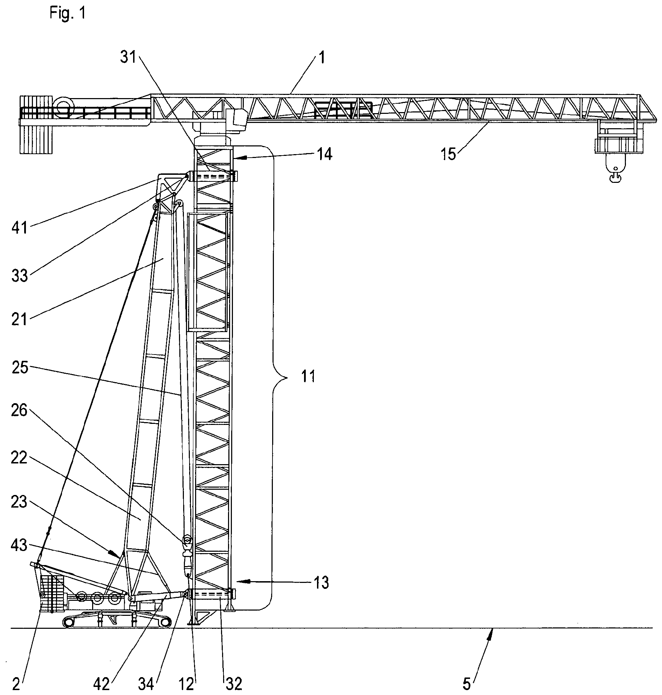

Figur 1 zeigt sowohl einen Raupenkran 2 als auch einen Turmdrehkran 1 während der Durchführung des erfindungsgemäßen Verfahrens. Der Turmdrehkran 1 ist in an sich bekannter Art und Weise ausgestaltet und umfasst einen aus einzelnen Gitterstücken zusammengesetzten Kranturm 11, an dessen Turmspitze 14 über ein Drehwerk ein Ausleger 15 drehbar aufgesetzt ist. Dieser Turmdrehkran 1 soll mithilfe des Raupenkrans 2 von einem Einsatzort A zu einem nachfolgenden Einsatzort B verfahren werden, ohne jedoch den Turmdrehkran 1 in seine Einzelteile zu demontieren. Zum Verfahren ist lediglich das Lösen des Turmfußes 13 vom Boden 5 des Einsatzortes A notwendig.

Dazu werden um den Kranturm 11 des Turmdrehkranes 1 zwei gelagerte Verbindungsrahmen 31, 32 montiert, die den Aussenumfang jeweils eines Gitterelements des Kranturms 11 vollständig bzw. zumindest teilweise umfassen. Der erste Verbindungsrahmen 31 wird dazu oben am Turm 11 im Bereich der Turmspitze 14 befestigt. Der zweite Verbindungsrahmen 32 wird an der Unterseite des Turmes 11, insbesondere im Bereich des Turmfußes 13 montiert. Zur Montage/Demontage besteht optional die Möglichkeit, die Rahmenstruktur über einen Mechanismus zu öffnen. Alternativ können die Verbindungsrahmen 31, 32 jedoch bereits während der Kranmontage befestigt werden und an der Kranstruktur verbleiben.

Sowohl der Rahmen 31 als auch der Rahmen 32 werden nicht starr mit den jeweiligen Gitterstücken verbunden, sondern vielmehr gleitend auf dem Außenumfang der Gitterstücke gelagert, sodass eine Axialbewegung des Kranturmes 11 durch die Rahmenöffnung möglich ist. In der Zeichnung wird eine Vertikalbewegung des Kranturmes nach oben und unten trotz quasi feststehender Verbindungsrahmen 31, 32 sichergestellt.

An dem Ausleger 22 des Raupenkrans 2 werden für die Aufnahme des Turmdrehkrans 1 zwei Aufnahmeteile 41, 42 montiert. Am Auslegerkopfstück 21 wird dazu ein rahmenartiges Aufnahmeteil 41 montiert, das mit dem oberen Verbindungsrahmen 31 über den Verbindungspunkt 33 gelenkig verbunden wird. Die Verbindungsstelle 33, insbesondere ein Verbolzpunkt, erlaubt eine Drehbewegung des Verbindungsrahmens 31 gegenüber dem Aufnahmeteil 41 um eine horizontale Drehachse quer zur Wippebene des Mobilkrans 2.

Am Auslegeranlenkstück 23 des Raupenkrans wird ein Schwenkarm 42 montiert, der zum einen um eine Horizontalachse schwenkbar gegenüber dem Anlenkstück 23 gelagert ist und ebenfalls eine gelenkige Verbindung im Bereich des Verbindungspunktes 34 mit dem Verbindungsrahmen 32 gestattet. Der Schwenkarm 42 ist zudem in Längsrichtung teleskopierbar ausgestaltet. Über die Variation der Schwenkarmlänge kann der Abstand des Turmfußes 13 zum Mobilkran 2 bestimmt und damit die Ausrichtung des hängenden Kranturms 11 beeinflusst werden.

Weiterhin wird der Schwenkarm 42 über die montierte Stütze 43 gehalten bzw. kann mittels der Stütze 43 der Schwenkwinkel des Schwenkarmes 42 gegenüber dem Anlenkstück 23 eingestellt werden. Die Stütze ist in Form eines hydraulischen Zylinders ausgestaltet, der sowohl am Schwenkarm als auch am Mobilkranausleger 22 befestigt ist.

Nachdem der Mobilkranausleger 22 mit dem Kranturm 11 verbunden ist, wird das Hubseil 25 des Raupenkrans 2 bzw. der daran befestigte Lasthaken 26 über ein oder mehreren Festpunkte 12 am Kranturm 11 des Turmdrehkrans 1 festgemacht. Sobald der Turmdrehkran 1 ausgeglichen ist, wird der Turmdrehkran 1 leicht vom Raupenkran 2 über dessen Hubwerk angehoben. Mit dem Hubwerk des Raupenkrans 2 wird der Turmdrehkran 1 unter Vorspannung gebracht, ohne dass der Turmdrehkran 1 angehoben wird. Damit entsteht ein stabiles System und die Verbindung des Kranturms 11 mit dem Boden 5 kann sicher gelöst werden. Wenn die feste Verbindung vom Turmdrehkran 1 mit dem Boden 5 gelöst ist, kann der Turmdrehkran 1 über das Hubwerk des Raupenkrans 2 hochgezogen werden. Durch die gelagerten Verbindungsrahmen 31, 32 lässt sich der Turmdrehkran 1 leichter vertikal hochziehen, bis dieser weit genug vom Boden 5 zum Verfahren abgehoben ist.

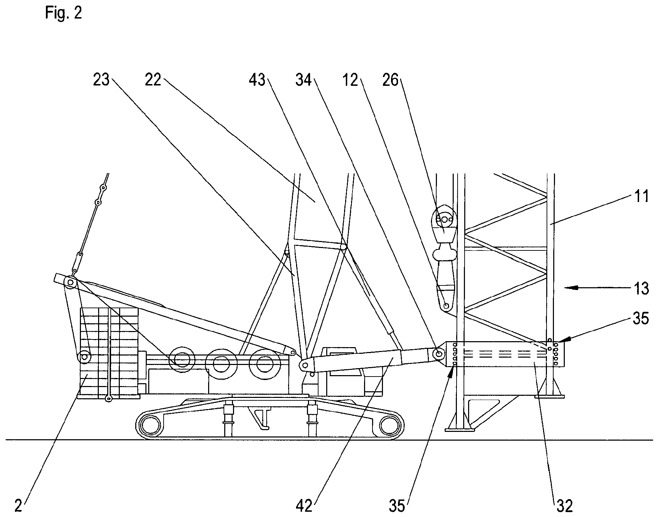

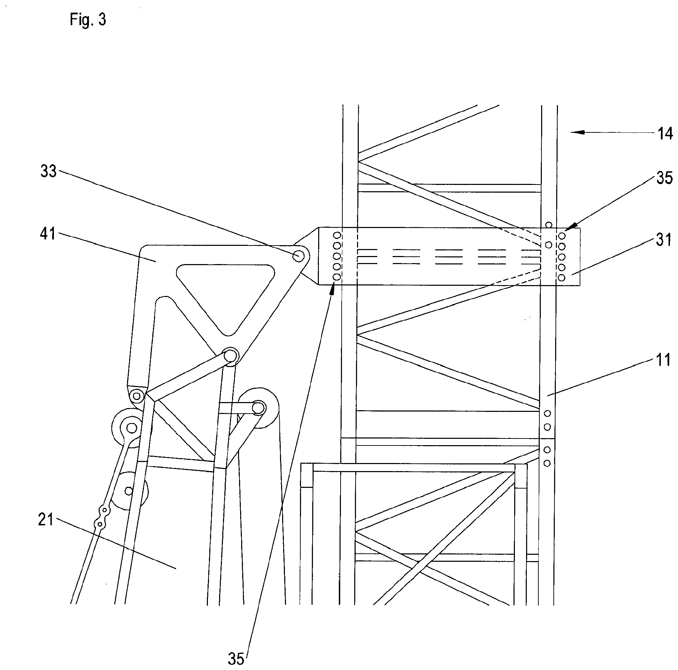

Wie dies insbesondere in den Detaildarstellungen der Figuren 2 und 3 angedeutet ist, sind im Bereich der inneren Rahmenöffnung der Verbindungsrahmen 31, 32 ein oder mehrere Gleitlager 35 vorgesehen, um die Reibekraft der Gleitbewegung des Kranturmes 11 durch die Rahmenöffnung der Verbindungsrahmen 31, 32 zu minimieren.

Durch das Aus- und Einfahren des Schwenkarmes 42 mit Hilfe des Teleskopiermechanismus kann der Turmdrehkran bzw. dessen Längsachse stabilisiert werden, um diese in einer nahezu vertikalen Position zu halten. Neben des Teleskopiermechanismus des Schwenkarmes 42 kann ebenfalls der Wippwinkel des Auslegers 22 angepasst werden. Zeitgleich lässt sich der Schwenkarm 42 mit Hilfe der Stütze 43 in seiner Höhe adjustieren.

Das Aufnahmeteil 41 am Raupenkranauslegerkopfstück 21 und der oberste Verbindungsrahmen 31 am Kranturm 11 lassen sich leicht, radial miteinander verdrehen, wodurch leichte Unebenheiten während des Verfahrens, wie beispielsweise Steigungen des Verfahrweges, überwunden werden können. Die voraussichtliche Dauer der Aufnahme des Turmdrehkranes 1 durch den Raupenkran 2 inklusive der wegabhängigen Fahrt kann mit ca. 1 Stunde bemessen werden.

Als alternative Lösung kann der untere Befestigungspunkt 32 am Kranturm 11 anders als im gezeigten Ausführungsbeispiel der Figuren 1 bis 3 auch starr ausgeführt sein.

Durch die vorstehend erläuterte Erfindung entfällt die bisher benötigte lange Demontagezeit, die zum Umsetzen des Turmdrehkrans 1 erforderlich war. Mit dieser Lösung wird der komplett montierte Turmdrehkran 1 mit Hilfe eines Raupenkranes 2 aufgenommen und hängend an dem Raupenkran 2 von A nach B umgesetzt.

## Patentansprüche

1. Verfahren zum Versetzen eines Turmdrehkranes (1) mit einem Mobilkran (2), insbesondere Raupenkran (2), wobei der montierte Turmdrehkran (1) über das Hubseil (25) des Mobilkranes (2) angehoben wird, um diesen zum Zielort zu versetzen, und der Turmdrehkran (1) mittels ein oder mehrerer Verbindungsstellen (33, 34) zwischen Mobilkranausleger (22) und Kranturm (11) während des Versetzens stabilisiert wird.

2. Verfahren nach Anspruch 1, **dadurch gekennzeichnet, dass** der Kranturm (11) während der Hubbewegung mittels wenigstens einer der ein oder mehreren Verbindungsstellen (33, 34), die ein Führungslager umfasst, in Hubrichtung geführt ist.

3. Verfahren nach einem der vorhergehenden Ansprüche, **dadurch gekennzeichnet, dass** der Turmdrehkran (1) über die Verbindungsstellen (33, 34) im Bereich der Turmspitze (14) mit der Auslegerspitze (21) des Raupenkrans (2) und/oder im Bereich des Turmfußes (13) mit dem Auslegeranlenkstück (23) des Raupenkrans (2) verbunden wird, wobei vorzugsweise zumindest die Verbindungsstelle (33) im Bereich der Turmspitze (14) ein Führungslager umfasst.

4. Verfahren nach einem der vorhergehenden Ansprüche, **dadurch gekennzeichnet, dass** die ein oder mehreren Verbindungsstellen (33, 34) gelenkig sind, insbesondere drehbar um eine horizontale Drehachse, vorzugsweise senkrecht zur Wippebene des Mobilkrans (2), wobei die Gelenkverbindung am Montagepunkt der Verbindungsstelle (33, 34) mit dem Mobilkranausleger (22) und/oder am Montagepunkt mit dem Kranturm (11) sitzt.

5. Verfahren nach einem der vorhergehenden Ansprüche, **dadurch gekennzeichnet, dass** die Lage der Längsachse des aufgenommenen Turmdrehkrans (1) über eine Anpassung des Wippwinkels des Mobilkranauslegers (22) und/oder eine Anpassung des Abstandes zwischen Mobilkranausleger (22) und Kranturm (11) mittels wenigstens einer längenveränderlichen Verbindungsstelle (42) gesteuert/geregelt wird, insbesondere nahezu senkrecht gehalten wird.

6. Verbindungsrahmen (31, 32) zur Montage an einem Kranturm (11) für die Durchführung des Verfahrens gemäß einem der vorhergehenden Ansprüche, **dadurch gekennzeichnet, dass** der Rahmen (31, 32) den Umfang des Kranturmes (11), insbesondere eines einzelnen Gitterstückes umfasst, wobei der Rahmen (31, 32) idealerweise ein oder mehrere Gleitlager und/oder wenigstens einen Knicklenker aufweist.

7. Verbindungsrahmen (31, 32) nach Anspruch 6, **dadurch gekennzeichnet, dass** der Verbindungsrahmen (31, 32) ein oder mehrere Befestigungsstellen (33, 34) zur Verbindung mit einem Mobilkranausleger (22) umfasst, insbesondere Befestigungsstellen (33, 34) zur Ausbildung einer Gelenkverbindung mit dem Mobilkranausleger (22), bevorzugt mit horizontaler Drehachse, die besonders bevorzugt quer zur Wippebene des Mobilkrans (2) verläuft.

8. Aufnahmemittel (41, 42) zur Montage an einem Mobilkranausleger (22) zur Befestigung eines Verbindungsrahmens (31, 32) gemäß einem der Ansprüche 6 oder 7 zur Durchführung des Verfahrens gemäß einem der Ansprüche 1 bis 5.

9. Aufnahmemittel (41, 42) nach Anspruch 8, **dadurch gekennzeichnet, dass** das Aufnahmemittel (41, 42) in Form eines Schwenkarmes (42) ausgestaltet ist, der schwenkbar am Mobilkranausleger (22), insbesondere am Auslegerfuß (23), montierbar ist und vorzugsweise gelenkig mit wenigstens einem Verbindungsrahmen (31, 32) gemäß einem der Ansprüche 6 oder 7 verbindbar ist.

10. Aufnahmemittel (41, 42) nach Anspruch 9, **dadurch gekennzeichnet, dass** der Schwenkarm (42) längenvariabel ist, beispielsweise mittels eines Telekopiermechanismus.

11. Aufnahmemittel (41, 42) nach einem der Ansprüche 9 oder 10, **dadurch gekennzeichnet, dass** wenigstens ein Stützzylinder (43) zur Fixierung und/oder Einstellung des Schwenkwinkels gegenüber dem Mobilkranausleger (22) vorgesehen ist.

12. Aufnahmemittel (41, 42) nach Anspruch 8, **dadurch gekennzeichnet, dass** das Aufnahmemittel (41) starr am Auslegerkopf (21) eines Mobilkrans (2) montierbar ist und ein oder mehrere Verbindungsstellen (33, 34) zur gelenkigen Verbindung mit einem Verbindungsrahmen (31, 32) gemäß einem der Ansprüche 6 oder 7 umfasst.

13. Turmdrehkran (1) mit wenigstens einem Verbindungsrahmen (31, 32) nach einem der Ansprüche 6 oder 7 zur Durchführung des Verfahrens gemäß einem der Ansprüche 1 bis 5.

14. Mobilkran (2), insbesondere Raupenkran (2), mit wenigstens einem Aufnahmemittel (41, 42) gemäß einem der Ansprüche 8 bis 12 zur Durchführung des Verfahrens gemäß einem der Ansprüche 1 bis 5.

15. System aus wenigstens einem Turmdrehkran (1) gemäß Anspruch 13 und wenigstens einem Mobilkran (2) gemäß Anspruch 14 zur Durchführung des Verfahrens gemäß einem der Ansprüche 1 bis 5.

## Claims

1. A method for transferring a rotary tower crane (1) with a mobile crane (2), in particular crawler crane (2), wherein the mounted rotary tower crane (1) is lifted by means of the lifting cable (25) of the mobile crane (2), in order to transfer the same to the target site, and during transfer the rotary tower crane (1) is stabilized by means of one or more connecting points(33, 34) between mobile crane boom (22) and crane tower (11).

2. The method according to claim 1, **characterized in that** during the lifting movement the crane tower (11) is guided in the lifting direction by means of at least one of the one or more connecting points (33, 34) which comprises a guide bearing.

3. The method according to any of the preceding claims, **characterized in that** via the connecting points (33, 34) in the region of the tower tip (14), the rotary tower crane (1) is connected with the boom tip (21) of the crawler crane (2) and/or in the region of the tower base(13) is connected with the boom articulation piece (23) of the crawler crane (2), wherein preferably at least the connecting point (33) in the region of the tower tip (14) comprises a guide bearing.

4. The method according to any of the preceding claims, **characterized in that** the one or more connecting points (33, 34) are articulated, in particular rotatable about a horizontal axis of rotation, preferably vertically to the luffing plane of the mobile crane (2), wherein the articulated connection is seated at the mounting point of the connecting point (33, 34) with the mobile crane boom (22) and/or at the mounting point with the crane tower (11).

5. The method according to any of the preceding claims, **characterized in that** the position of the longitudinal axis of the rotary tower crane (1) taken up is controlled/regulated, in particular maintained almost vertical, by an adaptation of the luffing angle of the mobile crane boom (22) and/or an adaptation of the distance between mobile crane boom (22) and crane tower (11) by means of at least one variable-length connecting point (42).

6. A connecting frame (31, 32) to be mounted on a crane tower (11) for carrying out the method according to any of the preceding claims, **characterized in that** the frame (31, 32) encloses the circumference of the crane tower (11), in particular of an individual lattice piece, wherein the frame (31, 32) ideally includes one or more plain bearings and/or at least one articulated dumper.

7. The connecting frame (31, 32) according to claim 6, **characterized in that** the connecting frame (31, 32) comprises one or more fastening points (33, 34) for connection with a mobile crane boom (22), in particular fastening points (33, 34) for forming an articulated connection with the mobile crane boom (22), preferably with horizontal axis of rotation, which particularly preferably extends transversely to the luffing plane of the mobile crane (2).

8. A take-up means (41, 42) to be mounted on a mobile crane boom (22) for fastening a connecting frame (31, 32) according to any of claims 6 or 7 for carrying out the method according to any of claims 1 to 5.

9. The take-up means (41, 42) according to claim 8, **characterized in that** the take-up means (41, 42) is designed in the form of a swivel arm (42) which is pivotally mountable on the mobile crane boom (22), in particular on the boom foot (23), and preferably can be articulated to at least one connecting frame (31, 32) according to any of claims 6 or 7.

10. The take-up means (41, 42) according to claim 9, **characterized in that** the swivel arm (42) is variable in length, for example by means of a telescoping mechanism.

11. The take-up means (41, 42) according to any of claims 9 or 10, **characterized in that** at least one support cylinder (43) is provided for fixing and/or adjusting the swivel angle with respect to the mobile crane boom (22).

12. The take-up means (41, 42) according to claim 8, **characterized in that** the take-up means (41) is rigidly mountable on the boom head (21) of a mobile crane (2) and comprises one or more connecting points (33, 34) for the articulated connection with a connecting frame (31, 32) according to any of claims 6 or 7.

13. A rotary tower crane (1) with at least one connecting frame (31, 32) according to any of claims 6 or 7 for carrying out the method according to any of claims 1 to 5.

14. A mobile crane (2), in particular crawler crane (2), with at least one take-up means (41, 42) according to any of claims 8 to 12 for carrying out the method according to any of claims 1 to 5.

15. A system comprising at least one rotary tower crane (1) according to claim 13 and at least one mobile crane (2) according to claim 14 for carrying out the method according to any of claims 1 to 5.

## Revendications

1. Procédé de changement de place d'une grue pivotante sur pylône (1) avec une grue mobile (2), en particulier une grue à chenilles (2), dans lequel la grue pivotante sur pylône (1) montée est relevée par l'intermédiaire du câble de levage (25) de la grue mobile (2) pour changer le place du celui-ci au lieu de destination, et la grue pivotante sur pylône (1) est stabilisée au moyen d'un ou de plusieurs points de liaison (33, 34) entre la flèche de grue mobile (22) et la tour de grue (11) pendant le changement de place.

2. Procédé selon la revendication 1, **caractérisé en ce que** la tour de grue (11) est guidée dans une direction de levage pendant le déplacement de levage au moyen d'au moins un parmi un ou plusieurs points de liaison (33, 34), qui comprend un palier de guidage.

3. Procédé selon l'une quelconque des revendications précédentes, **caractérisé en ce que** la grue pivotante sur pylône (1) est reliée par l'intermédiaire des points de liaison (33, 34) dans la zone de la pointe de tour (14) à la pointe de flèche (21) de la grue à chenilles (2) et/ou dans la zone du pied de tour (13) à la pièce d'articulation de flèche (23) de la grue à chenilles (2), dans lequel de préférence au moins le point de liaison (33) comprend, dans la zone de la pointe de tour (14), un palier de guidage.

4. Procédé selon l'une quelconque des revendications précédentes, **caractérisé en ce qu'**un ou plusieurs points de liaison (33, 34) sont articulés, en particulier de manière à pouvoir tourner autour d'un axe de rotation horizontale, de préférence de manière perpendiculaire par rapport au plan de basculement de la grue mobile (2), dans lequel le système de liaison par articulation repose au niveau du point de montage de l'point de liaison (33, 34) avec la flèche de grue mobile (22) et/ou au niveau du point de montage avec la tour de grue (11).

5. Procédé selon l'une quelconque des revendications précédentes, **caractérisé en ce que** la position de l'axe longitudinal de la grue pivotante sur pylône (1) logée est commandée et/ou régulée par l'intermédiaire d'une adaptation de l'angle de basculement de la flèche de grue mobile (22) et/ou d'une adaptation de la distance entre la flèche de grue mobile (22) et la tour de grue (11) au moyen d'au moins un point de liaison (42) à longueur variable, en particulier est maintenue quasiment de manière perpendiculaire.

6. Cadre de liaison (31, 32) destiné à être monté au niveau d'une tour de grue (11) pour la mise en oeuvre du procédé selon l'une quelconque des revendications précédentes, **caractérisé en ce que** le cadre (31, 32) comprend la périphérie de la tour de grue (11), en particulier d'une pièce en treillis individuelle, dans lequel le cadre (31, 32) présente idéalement un ou plusieurs paliers lisses et/ou au moins une bielle de pliage.

7. Cadre de liaison (31, 32) selon la revendication 6, **caractérisé en ce que** le cadre de liaison (31, 32) comprend un ou plusieurs points de fixation (33, 34) destinés à être reliés à une flèche de grue mobile (22), en particulier des points de fixation (33, 34) servant à réaliser une liaison articulée avec la flèche de grue mobile (22), de manière préférée avec un axe de rotation horizontal, qui s'étend en particulier et de manière préférée transversalement par rapport au plan de basculement de la grue mobile (2).

8. Moyen de logement (41, 42) destiné à être monté au niveau d'un flèche de grue mobile (22) servant à fixer un cadre de liaison (31, 32) selon l'une quelconque des revendications 6 ou 7 ou servant à mettre en oeuvre le procédé selon l'une quelconque des revendications 1 à 5.

9. Moyen de logement (41, 42) selon la revendication 8, **caractérisé en ce que** le moyen de logement (41, 42) est configuré sous la forme d'un bras pivotant (42), qui peut être monté de manière à pouvoir pivoter au niveau de la flèche de grue mobile (22), en particulier au niveau du pied de flèche (23) et qui peut être relié de préférence de manière articulée à au moins un cadre de liaison (31, 32) selon l'une quelconque des revendications 6 ou 7.

10. Moyen de logement (41, 42) selon la revendication 9, **caractérisé en ce que** le bras de pivotement (42) est variable en longueur, par exemple au moyen d'un mécanisme télescopique.

11. Moyen de logement (41, 42) selon l'une quelconque des revendications 9 ou 10, **caractérisé en ce qu'**au moins un cylindre d'appui (43) est prévu pour fixer et/ou régler l'angle de pivotement par rapport à la flèche de grue mobile (22).

12. Moyen de logement (41, 42) selon la revendication 8, **caractérisé en ce que** le moyen de logement (41) peut être monté de manière rigide au niveau de la tête de flèche (21) d'une grue mobile (2) et comprend un ou plusieurs points de liaison (33, 34) destinés à être reliés de manière articulée à un cadre de liaison (31, 32) selon l'une quelconque des revendications 6 ou 7.

13. Grue pivotante sur pylône (1) avec au moins un cadre de liaison (31, 32) selon l'une quelconque des revendications 6 ou 7 servant à mettre en oeuvre le procédé selon l'une quelconque des revendications 1 à 5.

14. Grue mobile (2), en particulier grue à chenilles (2), avec au moins un moyen de logement (41, 42) selon l'une quelconque des revendications 8 à 12 servant à la mise en oeuvre du procédé selon l'une quelconque des revendications 1 à 5.

15. Système composé d'au moins une grue pivotante sur pylône (1) selon la revendication 13 et d'au moins une grue mobile (2) selon la revendication 14 servant à la mise en oeuvre du procédé selon l'une quelconque des revendications 1 à 5.
